(19) Europäisches Patentamt
European Patent Office
Office européen des brevets

(11) **EP 4 340 404 A1**

(12) **EUROPEAN PATENT APPLICATION**
published in accordance with Art. 153(4) EPC

(43) Date of publication:
**20.03.2024 Bulletin 2024/12**

(21) Application number: **21941213.7**

(22) Date of filing: **10.05.2021**

(51) International Patent Classification (IPC):
**H04W 4/06** (2009.01)

(52) Cooperative Patent Classification (CPC):
**H04W 4/06;** Y02D 30/70

(86) International application number:
**PCT/CN2021/092894**

(87) International publication number:
**WO 2022/236637 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **JIANG, Xiaowei**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **PAGING METHOD AND APPARATUS**

(57) Embodiments of the present disclosure disclose a paging method and apparatus. The method is performed by a terminal, and comprises: configuring information in response to receiving a multicast broadcast service (MBS) paging message; according to the configured information for the MBS paging message, determining whether the MBS paging message is received, wherein the MBS paging message carries MBS service information. Therefore, by means of configuring a specific paging resource for the MBS paging message, a terminal receives the MBS paging message when the terminal is interested in an MBS service, thereby quickly activating the MBS service and conserving the power of the terminal.

```
┌─────────────────────────────────────────────┐
│ responding to reception of multicast broadcast│ ⌇ S1
│ service (MBS) paging message configuration     │
│ information                                     │
└─────────────────────────────────────────────┘
                      │
                      ▼
┌─────────────────────────────────────────────┐
│ determining whether to receive an MBS paging   │
│ message based on the MBS paging message         │ ⌇ S2
│ configuration information; in which the MBS     │
│ paging message carries MBS service information  │
└─────────────────────────────────────────────┘
```

**FIG. 2**

EP 4 340 404 A1

**Description**

**TECHNICAL FIELD**

The present disclosure relates to the field of communication technology, and more particularly to a paging method and apparatus.

**BACKGROUND**

Currently, in a 5th generation (5G, a future fifth generation) new radio (NR) system, a multimedia broadcast and multicast service (MBMS) and a multicast broadcast service (MBS) may be marked by a variety of marking methods and sent via a multicast or a broadcast.
A network device notifies a terminal that a service will arrive via a radio resource control (RRC) paging message, so as to notify the terminal to receive the paging message for itself and initiate a connection establishment or resume process.
However, for a paging message carrying MBS service information, the network device does not have a corresponding resource to send the paging message, and does not specify a monitoring method of the terminal and a specific behavior of the terminal after receiving the paging message, so all of these problems need to be solved urgently.

**SUMMARY**

Embodiments of the present disclosure provide a paging method and apparatus, which may configure a specific paging resource for a paging message carrying MBS service information. When the terminal is interested in an MBS service, it will monitor the paging message carrying the MBS service information at the specific paging resource, and after receiving the paging message carrying the MBS service information, the terminal determines whether to initiate a connection establishment or resume process according to the interested MBS service. This enables a rapid activation of the MBS service and a better power saving of the terminal.
In a first aspect, embodiments of the present disclosure provide a paging method, which is performed by a terminal and includes: responding to reception of multicast broadcast service (MBS) paging message configuration information; and determining whether to receive an MBS paging message based on the MBS paging message configuration information. The MBS paging message carries MBS service information.
In this technical solution, the terminal responds to reception of the multicast broadcast service (MBS) paging message configuration information; and determines whether to receive the MBS paging message based on the MBS paging message configuration information. The MBS paging message carries the MBS service information. In embodiments of the present disclosure, the multicast broadcast service (MBS) paging message configuration information is provided for the terminal. The terminal may determine whether to receive the MBS paging message based on the MBS paging message configuration information, so that the terminal receives the MBS paging message when the terminal is interested in the MBS service. This enables a rapid activation of the MBS service and a better power saving of the terminal.
In some embodiments, responding to reception of the multicast broadcast service (MBS) paging message configuration information includes: responding to reception of the MBS paging message configuration information specified in a protocol, or responding to reception of the MBS paging message configuration information provided by a network device.
In some embodiments, responding to the MBS paging message configuration information provided by the network device includes: responding to the MBS paging message configuration information provided by the network device via system information or MBS control channel information or a radio resource control (RRC) connection release message.
In some embodiments, the MBS paging message configuration information includes: a resource configuration of the MBS paging message. The resource configuration of the MBS paging message includes at least one of: a control channel of the MBS paging message; a time domain configuration of a data channel; a frequency domain configuration of the data channel; an identity of the MBS paging message; a paging cycle of the MBS paging message; a starting offset of the MBS paging message; or an association between a downlink beam and a control channel resource of the MBS paging message or a data channel resource.
In some embodiments, the downlink beam is marked by a synchronous signal block identity or a channel state information reference signal identity.
In some embodiments, the association between the downlink beam and the control channel resource of the MBS paging message or the data channel resource includes: in each paging cycle of the MBS paging message, an association between the downlink beam and one or more control channel resources of the MBS paging message or one or more data channel resources.

In some embodiments, the MBS paging message configuration information further includes: an MBS service identity corresponding to the resource configuration of the MBS paging message. The MBS service identity includes: a temporary mobile group identity (TMGI) or an MBS session identity or an MBS service flow identity.

In some embodiments, the MBS service information includes: the MBS service identity or an MBS service label.

In some embodiments, the method further includes: after responding to reception of the MBS paging message configuration information, determining whether to monitor a sending of the MBS paging message based on the multicast broadcast service (MBS) paging message configuration information.

In some embodiments, determining whether to monitor the sending of the MBS paging message based on the MBS paging message configuration information includes: not monitoring or stopping monitoring the sending of the MBS paging message, in case that an RRC connection state is a radio resource control connected state (CONNECTED), or a currently resident cell does not provide an MBS service, or a currently resident cell does not provide an MBS service that the terminal is interested in; or monitoring or starting monitoring the sending of the MBS paging message, in case that an RRC connection state is a radio resource control idle state (IDLE) or a radio resource control inactive state (INACTIVE), or a currently resident cell provides an MBS service, or a currently resident cell provides an MBS service that the terminal is interested in.

In some embodiments, the MBS service that the terminal is interested in includes: an MBS service marked by an MBS service identity that the terminal is interested in and provided in a user service description (USD) file; or an MBS service with an established MBS session; or an MBS service of which the terminal has joined a data transmission group.

In some embodiments, determining whether to monitor the sending of the MBS paging message based on the MBS paging message configuration information further includes: selecting a resource location in one paging cycle of the MBS paging message to monitor the sending of the MBS paging message, in case that the resource configuration of the MBS paging message includes the association between the downlink beam and the control channel resource of the MBS paging message or the data channel resource.

In some embodiments, selecting the resource location in one paging cycle of the MBS paging message to monitor the sending of the MBS paging message includes: in one paging cycle of the MBS paging message, selecting to monitor the sending of the MBS paging message in case that a measurement result of a beam is higher than a threshold value or a beam is a specified beam for receiving a paging message.

In some embodiments, the method further includes: starting an MBS service reception, in case that it is determined to receive the MBS paging message based on the MBS paging message configuration information.

In some embodiments, starting the MBS service reception includes: initiating a connection access process, or receiving a corresponding MBS service according to the resource configuration of the MBS paging message.

In some embodiments, initiating the connection access process includes: the terminal providing indication information to indicate that the MBS service needs to be received.

In some embodiments, initiating the connection access process includes: initiating a connection establishment process or a connection resume process.

In some embodiments, the MBS paging message configuration information includes: an MBS access control parameter. Starting the MBS service reception includes: responding to reception of the MBS access control parameter, and determining whether to initiate the connection access process.

In some embodiments, the MBS access control parameter includes at least one of: a specific access identity or access type corresponding to an MBS service; an access randomization parameter of the MBS service; or a duration configuration of an access prohibition, after determining that an access attempt is prohibited.

In some embodiments, the access randomization parameter of the MBS service includes: a random number interval for allowing access.

In some embodiments, the duration configuration of the access prohibition includes: a duration of an access prohibition timer or a randomization value scaling parameter of an access prohibition timer.

In some embodiments, the method further includes: not starting an MBS service reception, in case that it is determined not to receive the MBS paging message based on the MBS paging message configuration information. Not starting the MBS service reception includes not initiating a connection access process.

In some embodiments, not initiating the connection access process includes: not sending an RRC message corresponding to an access request or not sending random access request information.

In some embodiments, determining whether to receive the MBS paging message based on the MBS paging message configuration information includes: not receiving the MBS paging message, in case that an RRC connection state is a radio resource control connected state (CONNECTED), or a currently resident cell does not provide an MBS service, or a currently resident cell does not provide an MBS service that the terminal is interested in; or receiving the MBS paging message, in case that an RRC connection state is a radio resource control idle state (IDLE) or a radio resource control inactive state (INACTIVE), or a currently resident cell provides an MBS service, or the currently resident cell provides an MBS service that the terminal is interested in.

In a second aspect, embodiments of the present disclosure provide another paging method, which is performed by a network device and includes: responding to sending multicast broadcast service (MBS) paging message configuration information; and sending an MBS paging message based on the MBS paging message configuration information. The MBS paging message carries MBS service information.

In this technical solution, in response to the network device sending the multicast broadcast service (MBS) paging message configuration information, the MBS paging message is sent based on the MBS paging message configuration information. The MBS paging message carries the MBS service information. In embodiments of the present disclosure, in response to the network device sending the multicast broadcast service (MBS) paging message configuration information, the multicast broadcast service (MBS) paging message configuration information is provided for the terminal, the terminal may determine whether to receive the MBS paging message based on the MBS paging message configuration information, and the terminal receives the MBS paging message when the terminal is interested in the MBS service. This enables a rapid activation of the MBS service and a better power saving of the terminal.

In some embodiments, responding to sending the multicast broadcast service (MBS) paging message configuration information includes: responding to sending the MBS paging message configuration information specified in a protocol, or responding to sending the MBS paging message configuration information configured.

In some embodiments, responding to sending the MBS paging message configuration information configured includes: responding to sending the MBS paging message configuration information configured via system information or MBS control channel information or a radio resource control (RRC) connection release message.

In some embodiments, the MBS paging message configuration information includes: a resource configuration of the MBS paging message. The resource configuration of the MBS paging message includes at least one of: a control channel of the MBS paging message; a time domain configuration of a data channel; a frequency domain configuration of the data channel; an identity of the MBS paging message; a paging cycle of the MBS paging message; a starting offset of the MBS paging message; or an association between a downlink beam and a control channel resource of the MBS paging message or a data channel resource.

In some embodiments, the downlink beam is marked by a synchronous signal block identity or a channel state information reference signal identity.

In some embodiments, the association between the downlink beam and the control channel resource of the MBS paging message or the data channel resource includes: in each paging cycle of the MBS paging message, an association between the downlink beam and one or more control channel resources of the MBS paging message or one or more data channel resources.

In some embodiments, the MBS paging message configuration information further includes: an MBS service identity corresponding to the resource configuration of the MBS paging message. The MBS service identity includes: a temporary mobile group identity (TMGI) or an MBS session identity or an MBS service flow identity.

In some embodiments, the MBS service information includes: the MBS service identity or an MBS service label.

In some embodiments, the MBS paging message configuration information includes: an MBS access control parameter. After sending the MBS paging message based on the MBS paging message configuration information, the method further includes: controlling a terminal to initiate a connection access process according to the MBS access control parameter.

In some embodiments, controlling the terminal to initiate the connection access process includes: controlling the terminal to provide indication information indicating that the MBS service needs to be received.

In some embodiments, the MBS access control parameter includes at least one of: a specific access identity or access type corresponding to an MBS service; an access randomization parameter of the MBS service; or a duration configuration of an access prohibition, after determining that an access attempt is prohibited.

In some embodiments, the access randomization parameter of the MBS service includes: a random number interval for allowing access.

In some embodiments, the duration configuration of the access prohibition includes: a duration of an access prohibition timer or a randomization value scaling parameter of an access prohibition timer.

In some embodiments, the method further includes: controlling the terminal not to initiate the connection access process according to the MBS access control parameter. Not initiating the connection access process includes: not sending an RRC message corresponding to an access request or not sending random access request information.

In a third aspect, embodiments of the present disclosure provide a communication apparatus, which has part or all of functions for implementing the terminal in the method according to the first aspect above. For example, the communication apparatus may have functions as described in some or all the embodiments in the present disclosure, or may also have functions to separately implement any of embodiments in the present disclosure. The functions may be implemented by a hardware, or may be implemented by executing a corresponding software on the hardware. The hardware or the software includes one or more elements or modules corresponding to the above functions.

In some embodiments, a structure of the communication apparatus may include: a transceiving module and a processing module. The transceiving module is configured to respond to reception of multicast broadcast service (MBS) paging message configuration information. The processing module is configured to determine whether to receive an MBS paging message based on the multicast broadcast service (MBS) paging message configuration information. The MBS paging message carries MBS service information.

As an example, the processing module may be a processor, the transceiving module may be a transceiver or a communication interface, and the storage module may be a memory.

In a fourth aspect, embodiments of the present disclosure provide a communication apparatus, which has part or all of functions for implementing the base station in the method according to the second aspect above. For example, the communication apparatus may have functions as described in some or all the embodiments in the present disclosure, or may also have functions to separately implement any of embodiments in the present disclosure. The functions may be implemented by a hardware, or may be implemented by executing a corresponding software on the hardware. The hardware or the software includes one or more elements or modules corresponding to the above functions.

In an implementation manner, a structure of the communication apparatus may include: a transceiving module and a processing module. The transceiving module is configured to respond to sending multicast broadcast service (MBS) paging message configuration information. The processing module is configured to send an MBS paging message based on the multicast broadcast service (MBS) paging message configuration information. The MBS paging message carries MBS service information.

As an example, the processing module may be a processor, the transceiving module may be a transceiver or a communication interface, and the storage module may be a memory.

In a fifth aspect, embodiments of the present disclosure provide a communication device, which includes a processor; and a memory having stored therein a computer program. The processor executes the computer program stored in the memory, to cause the device to implement the method according to the first aspect above.

In a sixth aspect, embodiments of the present disclosure provide a communication device, which includes a processor; and a memory having stored therein a computer program. The processor executes the computer program stored in the memory, to cause the device to implement the method according to the second aspect above.

In a seventh aspect, embodiments of the present disclosure provide a communication device, which includes a processor and an interface circuit. The interface circuit is configured to receive code instructions and transmit the code instructions to the processor. The processor is configured to run the code instructions to implement the method according to the first aspect above.

In an eighth aspect, embodiments of the present disclosure provide a communication device, which includes a processor and an interface circuit. The interface circuit is configured to receive code instructions and transmit the code instructions to the processor. The processor is configured to run the code instructions to implement the method according to the second aspect above.

In a ninth aspect, embodiments of the present disclosure provide a computer-readable storage medium having stored therein instructions that, when executed, cause the method according to the first aspect above to be implemented.

In a tenth aspect, embodiments of the present disclosure provide a computer-readable storage medium having stored therein instructions that, when executed, cause the method according to the second aspect above to be implemented.

In an eleventh aspect, embodiments of the present disclosure provide a computer program product, which includes a computer program that, when run on a computer, causes the computer to implement the method according to the first aspect above.

In a twelfth aspect, embodiments of the present disclosure provide a computer program product, which includes a computer program that, when run on a computer, causes the computer to implement the method according to the second aspect above.

In a thirteenth aspect, the present disclosure provides a chip system, which includes at least one processor and an interface, for supporting a terminal to implement functions involved in the first aspect, for example, to determine or process at least one of data and information involved in the above method. In a possible design, the chip system further includes a memory for storing necessary computer programs and data of the terminal. The chip system may consist of chips, or may include chips and other discrete devices.

In a fourteenth aspect, the present disclosure provides a chip system, which includes at least one processor and an interface, for supporting a terminal to implement functions involved in the second aspect, for example, to determine or process at least one of data and information involved in the above method. In a possible design, the chip system further includes a memory for storing necessary computer programs and data of the terminal. The chip system may consist of chips, or may include chips and other discrete devices.

In a fifteenth aspect, embodiments of the present disclosure provide a computer program that, when run on a computer, causes the computer to implement the method according to the first aspect above.

In a sixteenth aspect, embodiments of the present disclosure provide a computer program that, when run on a computer, causes the computer to implement the method according to the second aspect above.

**BRIEF DESCRIPTION OF THE DRAWINGS**

In order to more clearly illustrate the technical solutions in embodiments of the present disclosure or the background technology, drawings that need to be used in embodiments of the present disclosure or the background technology will be described below.

FIG. 1 is a schematic architecture diagram of a communication system provided by embodiments of the present disclosure;

FIG. 2 is a schematic flowchart of a paging method provided by embodiments of the present disclosure;

FIG. 3 is a schematic flowchart of another paging method provided by embodiments of the present disclosure;

FIG. 4 is a schematic flowchart of another paging method provided by embodiments of the present disclosure;

FIG. 5 is a schematic flowchart of another paging method provided by embodiments of the present disclosure;

FIG. 6 is a schematic flowchart of another paging method provided by embodiments of the present disclosure;

FIG. 7 is a schematic block diagram of a communication apparatus provided by embodiments of the present disclosure;

FIG. 8 is a schematic block diagram of another communication device provided by embodiments of the present disclosure;

FIG. 9 is a schematic block diagram of a chip provided by embodiments of the present disclosure.

**DETAILED DESCRIPTION**

In order to better understand a paging method provided in embodiments of the present disclosure, a communication system used in embodiments of the present disclosure is firstly described below.

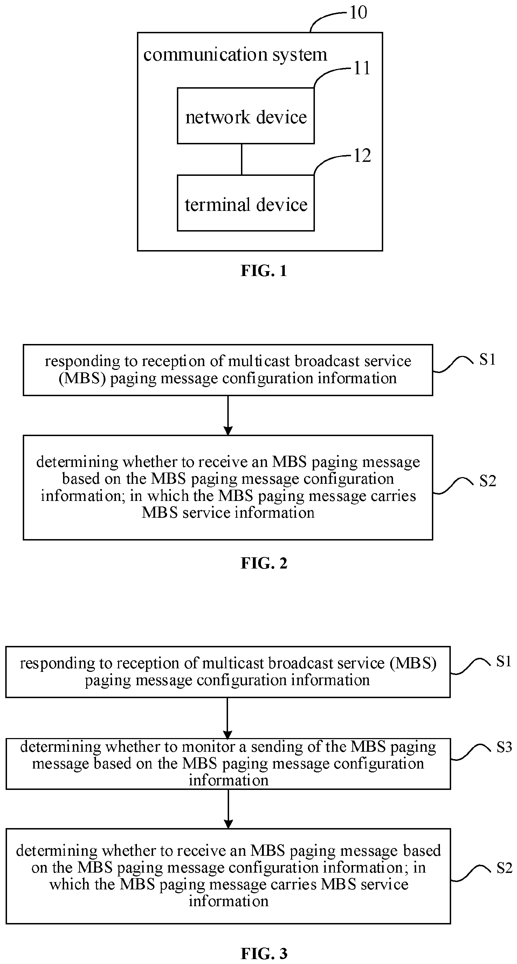

As shown in FIG. 1, FIG. 1 is a schematic architecture diagram of a communication system 10 provided by embodiments of the present disclosure. The communication system 10 may include, but is not limited to, a network device 11 and a terminal 12. The number and forms of the devices shown in FIG. 1 are only used as an example and do not constitute a limitation on embodiments of the present disclosure. The communication system may include two or more network devices 11 and two or more terminals 12 in practical applications. As an example for illustration, the communication system 10 shown in FIG. 1 includes a network device 11 and a terminal 12.

It should be noted that the technical solutions of embodiments of the present disclosure may be applied to various communication systems, for example, a long term evolution (LTE) system, a 5th generation (5G) mobile communication system, a 5G new radio (NR) system, or other new mobile communication systems in the future.

The network device 11 in embodiments of the present disclosure is an entity at a network side for sending or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present disclosure do not limit the specific technology and specific device form adopted by the network device. The network device provided by embodiments of the present disclosure may be composed of a central unit (CU) and distributed units (DU). The CU may also be called a control unit. Using the CU-DU structure allows to split a protocol layer of the network device, such as the base station, a part of functions of the protocol layer is centrally controlled in the CU, some or all of the remaining functions of the protocol layer are distributed in the DUs, and the CU centrally controls the DUs.

The terminal 12 in embodiments of the present disclosure is an entity at a user side for receiving or sending signals, such as a mobile phone. The terminal may also be called a terminal, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present disclosure do not limit the specific technology and the specific device form adopted by the terminal.

It can be understood that the communication system described in embodiments of the present disclosure is intended to illustrate the technical solutions of embodiments of the present disclosure more clearly, and does not constitute a limitation on the technical solutions provided by embodiments of the present disclosure. Those of ordinary skill in the art will know that with an evolution of a system architecture and an emergence of a new service scenario, the technical solutions provided by embodiments of the present disclosure are also applicable to similar technical problems.

Currently, methods for configuring and sending an MBS service include that: an MBMS service or an MBS service is marked by an MBS service identity like a temporary mobile group identity (TMGI), an MBS session identity (ID), or an MBS service flow identity (MBS QoS flow ID).

The MBS service has two sending modes. The first mode is multicast sending. In the first mode, the terminal enters a radio resource control (RRC) connected state (CONNECTED) to receive transmission configuration information of the MBS service, and then the terminal can receive the MBS service. A network device sends reception configuration information of the MBS service to the terminal via a terminal-specific signaling.

The second mode is broadcast sending. In the second mode, the terminal may receive the transmission configuration information of the MBS service in a radio resource control idle state (IDLE) or a radio resource control inactive state (INACTIVE) or the radio resource control connected state (CONNECTED), and receive the MBS service. The network device sends the reception configuration information of the MBS service to the terminal via system information, such as a system information block (SIB), and MBS control channel information, such as a multicast control channel (MCCH).

A paging method includes that: the network device notifies the terminal that a service will arrive via a radio resource control (RRC) paging message, and the paging message contains an identity of the terminal. The terminal calculates a paging time position that needs to be monitored in each paging cycle according to the paging cycle configured by the network device and its own identity. When the terminal receives the paging message for itself in the radio resource control idle state (IDLE) or the radio resource control inactive state (INACTIVE), the terminal will initiate a connection establishment process.

The paging message is sent to the terminal through scheduling on a physical downlink control channel (PDCCH) identified by a paging radio network temporary identity (P-RNTI).

However, when the network device wants to activate a specific MBS service, the network device may notify the terminal of the specific MBS service to be activated by carrying a session identity of the MBS service (MBS session ID) in a paging message. What resource does the network device use to send the paging message carrying the session ID of the MBS service, how does the terminal monitor the paging message, and what specific action should the terminal take after receiving the paging message, all of which are problems that need to be solved urgently.

In view of this, embodiments of the present disclosure provide a paging method and apparatus. A specific paging resource is configured for a paging message carrying MBS service information. The terminal monitors the paging message in the specific paging resource when it is interested in the MBS service, and after receiving the paging message, the terminal determines whether to initiate a connection establishment or resume process according to the MBS service it is interested in. In this way, the MBS service can be activated rapidly, thereby saving power of the terminal.

The paging method and apparatus provided by the present disclosure will be described in detail below with reference to the accompanying drawings.

Referring to FIG. 2, which is a schematic flowchart of a paging method provided by embodiments of the present disclosure, the method is performed by a terminal. As shown in FIG. 2, the method may include, but is not limited to, the following steps:

S 1, responding to reception of multicast broadcast service (MBS) paging message configuration information.

In embodiments of the present disclosure, the multicast broadcast service (MBS) paging message configuration information includes a resource configuration of an MBS paging message. The resource configuration of the MBS paging message is a specific configuration for transmitting the MBS paging message. It can be understood that information such as a position where the MBS paging message is carried may be determined according to the resource configuration of the MBS paging message.

In some embodiments, the MBS paging message configuration information includes one or more sets of resource configurations of the MBS paging message. The one or more sets of resource configurations of the MBS paging message may correspond to one or more MBS services.

In S2, whether to receive the MBS paging message is determined based on the MBS paging message configuration information. The MBS paging message carries MBS service information.

It can be understood that during a paging process, the terminal determines whether there exists an MBS service of interest according to the resource configuration of the MBS paging message in the MBS paging message configuration information. When there exists an MBS service that the terminal is interested in, the terminal receives the MBS paging message.

In embodiments of the present disclosure, the terminal responds to reception of the multicast broadcast service (MBS) paging message configuration information, and determines whether to receive the MBS paging message based on the MBS paging message configuration information. The MBS paging message carries the MBS service information. In embodiments of the present disclosure, the multicast broadcast service (MBS) paging message configuration information is provided for the terminal. The terminal may determine whether to receive the MBS paging message based on the MBS paging message configuration information, so that the terminal receives the MBS paging message when the terminal is interested in the MBS service. This enables a rapid activation of the MBS service and a better power saving of the terminal.

In some embodiments, responding to reception of the MBS paging message configuration information includes: responding to reception of the MBS paging message configuration information specified in a protocol, or responding to reception of the MBS paging message configuration information provided by a network device.

In embodiments of the present disclosure, the MBS paging message configuration information may be specified by the protocol, or may be provided by the network device, or may be implemented in other ways, which will not be specifically limited by the present disclosure.

In some embodiments, responding to the MBS paging message configuration information provided by the network device includes: responding to the MBS paging message configuration information provided by the network device via system information or MBS control channel information or a radio resource control (RRC) connection release message.

In embodiments of the present disclosure, when the MBS paging message configuration information is provided by the network device, it may be provided via the system information, such as: a system information block (SIB); or provided via the MBS control channel information, such as: a multicast control channel (MCCH); or provided via the RRC connection release message, or in any other ways that may be used to provide the MBS paging message configuration information, which will not be specifically limited by embodiments of the present disclosure.

In some embodiments, the MBS paging message configuration information includes the resource configuration of the MBS paging message. The resource configuration of the MBS paging message includes at least one of: a control channel of the MBS paging message; a time domain configuration of a data channel; a frequency domain configuration of the data channel; an identity of the MBS paging message; a paging cycle of the MBS paging message; a starting offset of the MBS paging message; or an association between a downlink beam and a control channel resource of the MBS paging message or a data channel resource.

The control channel of the MBS paging message and the time domain configuration of the data channel include for example: a paging search space of a physical downlink control channel (PDCCH) for scheduling an MBS service paging message. If no paging search space of the PDCCH for scheduling the MBS service paging message is additionally configured, a paging search space of a P-RNTI PDCCH may be used by default.

The control channel of the MBS paging message and the frequency domain configuration of the data channel include for example: a control resource set (CORESET) of the PDCCH for scheduling the MBS service paging message. If no CORESET of the PDCCH for scheduling the MBS service paging message is additionally configured, a CORESET of the P-RNTI PDCCH may be used by default.

The identity of the MBS paging message includes for example: an identity of the PDCCH for scheduling the MBS paging message, such as: an MBS identity identified by a P-RNTI. If no identity of the PDCCH for scheduling the MBS service paging message is additionally configured, an identity of the PDCCH identified by the P-RNTI may be used by default.

The paging cycle of the MBS paging message for example is a paging cycle of for example 50 ms, 100 ms, 200 ms, etc.

The starting offset of the MBS paging message. For example, a starting monitoring position of each cycle of the MBS paging message may be calculated by a following formula:

$$\text{mbs-StartOffset} = [(\text{SFN} \times 10) + \text{subframe\_number}] \text{ modulo (mbs-PagingCycle)},$$

where the SFN is a system frame number, the subframe_number is a subframe number and/or a time slot number and/or an orthogonal frequency division multiplexing (OFDM) symbol number, the mbs-PagingCycle is the paging cycle of the MBS paging message, and the mbs-StartOffset is a starting position offset of the MBS paging message.

For the association between the downlink beam and the control channel resource of the MBS paging message or the data channel resource, the data channel resource includes for example a physical downlink shared channel (PDSCH) resource.

In some embodiments, the MBS paging message configuration information further includes an MBS service identity corresponding to the resource configuration of the MBS paging message. The MBS service identity includes: a temporary mobile group identity (TMGI) or an MBS session identity or an MBS service flow identity.

In some embodiments, the downlink beam is marked by a synchronous signal block (SSB) identity or a channel state information reference signal (CSI-RS) identity.

In some embodiments, the association between the downlink beam and the control channel resource of the MBS paging message or the data channel resource includes: in each paging cycle of the MBS paging message, an association between the downlink beam and one or more control channel resources of the MBS paging message or one or more data channel resources.

In embodiments of the present disclosure, in one paging cycle of the MBS paging message, N control channel resources of the MBS paging message are numbered according to time-frequency positions, and M downlink beams are numbered. The N control channel resources of the MBS paging message may be alternatively allocated to the M downlink beams in numbered order, or the N control channel resources of the MBS paging message may be continuously allocated to the M downlink beams in numbered order. Numbering is performed according to the time-frequency positions, including: numbering according to time domain positions or numbering according to frequency domain positions.

In an illustrative embodiment, if the N is 8, and the M is 4, that is, in one paging cycle of the MBS paging message, 8 control channel resources of the MBS paging message are numbered according to the time-frequency positions, and 4 downlink beams are numbered. The 8 control channel resources of the MBS paging message are alternatively allocated to the 4 downlink beams in numbered order, or the 8 control channel resources of the MBS paging message may be continuously allocated to the 8 downlink beams in numbered order.

The 8 control channel resources of the MBS paging message are alternatively allocated to the 4 downlink beams in numbered order. For example: control channel resources numbered 1 and 5 of the MBS paging message correspond to a downlink beam 1, control channel resources numbered 2 and 6 of the MBS paging message correspond to a downlink beam 2, control channel resources numbered 3 and 7 of the MBS paging message correspond to a downlink beam 3, and control channel resources numbered 4 and 8 of the MBS paging message correspond to a downlink beam 4.

The 8 control channel resources of the MBS paging message are continuously allocated to the 4 downlink beams in numbered order. For example: control channel resources numbered 1 and 2 of the MBS paging message correspond to the downlink beam 1, control channel resources numbered 3 and 4 of the MBS paging message correspond to the downlink beam 2, control channel resources numbered 5 and 6 of MBS paging message correspond to the downlink beam 3, and control channel resources numbered 7 and 8 of the MBS paging message correspond to 4.

In embodiments of the present disclosure, in one paging cycle of the MBS paging message, N data channel resources are numbered according to time-frequency positions, and M downlink beams are numbered. The N data channel resources may be alternatively allocated to the M downlink beams in numbered order, or the N data channel resources may be continuously allocated to the M downlink beams in numbered order. Numbering is performed according to the time-frequency positions, including numbering according to time domain positions or numbering according to frequency domain positions.

In an illustrative embodiment, if the N is 8, and the M is 4, that is, in one paging cycle of the MBS paging message, 8 data channel resources are numbered according to the time-frequency positions, and 4 downlink beams are numbered. The 8 data channel resources are alternatively allocated to the 4 downlink beams in numbered order, or the 8 data channel resources may be continuously allocated to the 4 downlink beams in numbered order.

The 8 data channel resources are alternatively allocated to the 4 downlink beams in numbered order. For example: data channel resources numbered 1 and 5 correspond to a downlink beam 1, data channel resources numbered 2 and 6 correspond to a downlink beam 2, data channel resources numbered 3 and 7 correspond to a downlink beam 3, and data channel resources numbered 4 and 8 correspond to a downlink beam 4.

The 8 data channel resources are continuously allocated to the 4 downlink beams in numbered order. For example: data channel resources numbered 1 and 2 correspond to the downlink beam 1, data channel resources numbered 3 and 4 correspond to the downlink beam 2, data channel resources numbered 5 and 6 correspond to the downlink beam 3, and data channel resources numbered 7 and 8 correspond to 4.

In some embodiments, if one set of resource configurations of the MBS paging message correspond to a plurality of MBS services, a plurality of resources of the MBS paging message in the set of resource configurations of the MBS paging message may be allocated to different MBS services respectively. For example, there are 2 PDCCH resources in one MBS paging cycle, PDCCH resource-1 is allocated to MBS service-1, and PDCCH resource-2 is allocated to MBS service-2.

In some embodiments, the MBS service information includes: an MBS service identity or an MBS service label.

The MBS service identity includes a temporary mobile group identity (TMGI) or an MBS session identity or an MBS service flow identity.

The MBS service label includes a system message, or an MBS service list provided in a user service description (USD) file. Each item in the MBS service list corresponds to an MBS service, and a label of an item in the MBS service list corresponds to an MBS service label. For example, there are 4 MBS services (MBS service-1, MBS service-2, MBS service-3, and MBS service-4) in the MBS service list, and items in the MBS service list are marked in order as item-1, item-2, item-3, and item-4, then labels of the item-1, the item-2, the item-3 and the item-4 correspond to the MBS service-1, the MBS service-2, the MBS service-3 and the MBS service-4, respectively.

As shown in FIG. 3, the paging method provided in embodiments of the present disclosure further includes: after S 1: responding to reception of multicast broadcast service (MBS) paging message configuration information, performing S3: determining whether to monitor a sending of the MBS paging message based on the MBS paging message configuration information.

For example, after receiving the MBS paging message configuration information, the terminal monitors scheduling information corresponding to the MBS paging message on a PDCCH resource corresponding to the resource configuration of the MBS paging message within a paging cycle of 100 ms.

In some embodiments, determining whether to monitor the sending of the MBS paging message based on the MBS paging message configuration information includes: not monitoring or stopping monitoring the sending of the MBS paging message, in case that an RRC connection state is a radio resource control connected state (CONNECTED), or a currently resident cell does not provide an MBS service, or a currently resident cell does not provide an MBS service that the terminal is interested in; or monitoring or starting monitoring the sending of the MBS paging message, in case that an RRC connection state is a radio resource control idle state (IDLE) or a radio resource control inactive state (INACTIVE), or a currently resident cell provides an MBS service, or a currently resident cell provides an MBS service that the terminal is interested in.

The currently resident cell not providing the MBS service includes a case where system information corresponding to the MBS service is not provided in the currently resident cell of the terminal. The currently resident cell not providing the MBS service that the terminal is interested in, for example, includes a case where system information of the currently resident cell indicates that the cell provides MBS service-1, but the terminal is interested in MBS service-2.

In some embodiments, the MBS service that the terminal is interested in includes: an MBS service marked by an MBS service identity that the terminal is interested in and provided in a user service description (USD) file; or an MBS service with an established MBS session; or an MBS service of which the terminal has joined a data transmission group.

For the MBS service marked by the MBS service identity that the terminal is interested in and provided in the user service description (USD) file, for example: the USD indicates that TMGI-1 or MBS session ID-1 is an MBS service that the terminal is interested in.

For the MBS service with the established MBS session, for example: MBS service-1 has established a corresponding MBS session. It can be understood that for the MBS service-1 with the established MBS session, a same type of MBS service-1 has already been used by the terminal, which means that the terminal should also be interested in the MBS service-1.

For the MBS service of which the terminal has joined the data transmission group, for example: the terminal has joined a data transmission group of the MBS service-1 via a non-access stratum (NAS) message negotiation. It can be understood that users in the data transmission group will be notified of what programs are to be played via a broadcast. The terminal has joined the data transmission group of the MBS service-1 via the NAS message negotiation, so it indirectly indicates that the terminal is interested in the MBS service-1 in the data transmission group.

In some embodiments, determining whether to monitor the sending of the MBS paging message based on the MBS paging message configuration information further includes: selecting a resource location in one paging cycle of the MBS paging message to monitor the sending of the MBS paging message, in case that the resource configuration of the MBS paging message includes the association between the downlink beam and the control channel resource of the MBS paging message or the data channel resource.

In some embodiments, selecting the resource location in one paging cycle of the MBS paging message to monitor the sending of the MBS paging message includes: in one paging cycle of the MBS paging message, selecting to monitor the sending of the MBS paging message in case that a measurement result of a beam is higher than a threshold value or a beam is a specified beam for receiving a paging message.

For the specified beam for receiving the paging message, for example, there are 4 control channel resources of the MBS paging message or 4 data channel resources in one paging cycle, which correspond to 4 beams, respectively. When the network device specifies the terminal to receive the paging message at beam-1, the terminal selects to receive the paging message at the beam-1 as specified by the network device.

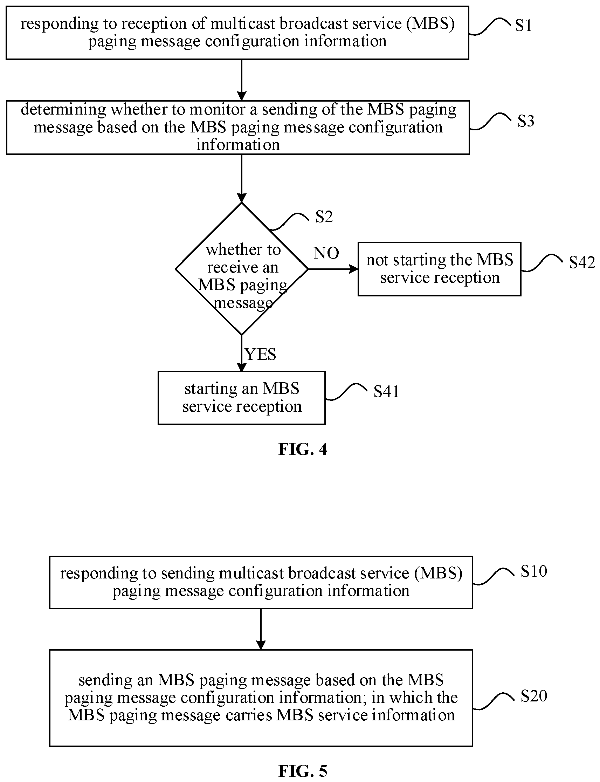

As shown in FIG. 4, the paging method provided in embodiments of the present disclosure further includes: performing S41: starting an MBS service reception, in case that it is determined in step S2 to receive an MBS paging message based on MBS paging message configuration information.

In some embodiments, starting the MBS service reception includes initiating a connection access process, or receiving a corresponding MBS service according to the resource configuration of the MBS paging message.

In some embodiments, initiating the connection access process includes: the terminal providing indication information to indicate that the MBS service needs to be received.

In embodiments of the present disclosure, the terminal receives the MBS paging message, starts the MBS service reception, and initiates the connection access process. The MBS service information carried in the MBS paging message includes an MBS service that the terminal is interested in, and the terminal provides the indication information to indicate that the MBS service needs to be received.

The indication information may include at least one of:

1) a reason for the connection access being a need of receiving the MBS service, for example: a value of cause indicated in an RRCSetuRequest or RRCResumeRequest message being mobile terminated-MBS (MT-MBS), that is, a connection establishment process initiated due to reception of an MBS paging.

2) the MBS service information, for example, the MBS service information including: an MBS service identity or an MBS service label.

The MBS service identity includes a temporary mobile group identity (TMGI) or an MBS session identity or an MBS service flow identity.

The MBS service label includes a system message, or an MBS service list provided in a user service description (USD) file. Each item in the MBS service list corresponds to an MBS service, and a label of an item in the MBS service list corresponds to an MBS service label. For example, there are 4 MBS services (MBS service-1, MBS service-2, MBS service-3, and MBS service-4) in the MBS service list, and items in the MBS service list are marked in order as item-1, item-2, item-3, and item-4, then labels of the item-1, the item-2, the item-3 and the item-4 correspond to the MBS service-1, the MBS service-2, the MBS service-3 and the MBS service-4, respectively.

In some embodiments, initiating the connection access process includes: initiating a connection establishment process or a connection resume process.

In embodiments of the present disclosure, initiating the connection establishment process includes: for the terminal in an IDLE state, and the MBS service being send in the first mode: the terminal enters a radio resource control (RRC) connected state (CONNECTED) to receive transmission configuration information of the MBS service, and then the terminal can receive the MBS service. The network device sends reception configuration information of the MBS service to the terminal via a terminal-specific signaling, and the terminal initiates the connection establishment process at this time. Specifically, initiating the connection establishment process for example includes: sending an RRC SetupRequest message.

In embodiments of the present disclosure, initiating the connection resume process includes: for the terminal in an INACTIVE state, and the MBS service being sent in the first mode: the terminal enters a radio resource control (RRC) connected state (CONNECTED) to receive the transmission configuration information of the MBS service, and then the terminal can receive the MBS service. The network device sends the reception configuration information of the MBS service to the terminal via a terminal-specific signaling, and the terminal initiates the connection resume process. Specifically, initiating the connection resume process for example includes: sending an RRC ResumeRequest message.

Receiving the corresponding MBS service according to the resource configuration of the MBS paging message includes that: the MBS service is sent in the second type of broadcast sending, the terminal may receive the transmission configuration information of the MBS service in a radio resource control idle state (IDLE) or a radio resource control inactive state (INACTIVE) or the radio resource control connected state (CONNECTED), and receive the MBS service. The network device sends the reception configuration information of the MBS service to the terminal via system information, such as a system information block (SIB), and MBS control channel information, such as a multicast control channel (MCCH), and the terminal receives the resource configuration of the MBS paging message, and receives the corresponding MBS service via the resource configuration of the MBS paging message.

In some embodiments, the MBS paging message configuration information includes an MBS access control parameter. Starting the MBS service reception includes: responding to reception of the MBS access control parameter, and determining whether to initiate the connection access process.

In some embodiments, the MBS access control parameter includes at least one of: a specific access identity or access type corresponding to an MBS service; an access randomization parameter of the MBS service; or a duration configuration of an access prohibition, after determining that an access attempt is prohibited.

The specific access identity or access type corresponding to the MBS service includes: an access identity ID, such as access identity-1, or an access type, such as access category-1. When the specific access identity or access type indicates an access prohibition (for example: barred) in a currently resident cell, the terminal will not initiate an access request.

In some embodiments, the access randomization parameter of the MBS service includes: a random number interval for allowing access.

For the random number interval for allowing access, for example, a random parameter range is [0, 1], and a random parameter range for allowing access is [0, 0.5]. The terminal selects a random parameter from [0, 1] using a uniform distribution method, if the random parameter belongs to [0, 0.5], the terminal may initiate the access attempt.

In some embodiments, the duration configuration of the access prohibition includes: a duration of an access prohibition timer or a randomization value scaling parameter of an access prohibition timer.

In embodiments of the present disclosure, for the duration of the access prohibition timer, it can be understood that a corresponding duration is set through the access prohibition timer, so that after it is determined that the access attempt is prohibited, another access within the corresponding duration is prohibited.

In embodiments of the present disclosure, for the randomization value scaling parameter of the access prohibition timer, for example, after the terminal determines that access to the MBS service is prohibited, it needs to start the access prohibition timer of the MBS service, and the terminal does not initiate the access request during a running of the timer. If the duration of the access prohibition timer configured by the network device is a, the terminal selects a random number X from [0, 1] using a uniform distribution method, and a scaling parameter of the random number X configured on a network side or specified in a protocol is b (where a value of the b may be "1", that is, no additional scaling is performed on the random number X), and then a final value of the random number is bX, and the terminal determines the duration configuration y of the access prohibition by calculating according to the a and the bX.

Referring to FIG. 4 again, the paging method provided by embodiments of the present disclosure further includes: performing S42: not starting the MBS service reception, in case that it is determined in step S2 not to receive the MBS paging message based on the MBS paging message configuration information. Not starting the MBS service reception includes not initiating the connection access process.

In some embodiments, not initiating the connection access process includes: not sending a radio resource control (RRC) message corresponding to an access request or not sending random access request information.

In not sending the radio resource control (RRC) message corresponding to the access request, the radio resource control (RRC) message includes: a connection establishment request message or a connection resume request message.

Not sending the random access request information for example includes: not sending first random access response information Msg1 of a 4-step random access process, or not sending second random access response information MsgB of a 2-step random access process.

In some embodiments, determining whether to receive the MBS paging message based on the MBS paging message configuration information includes: not receiving the MBS paging message, in case that a radio resource control (RRC) connection state is a radio resource control connected state (CONNECTED), or a currently resident cell does not provide an MBS service, or a currently resident cell does not provide an MBS service that the terminal is interested in; or receiving the MBS paging message, in case that a radio resource control (RRC) connection state is a radio resource control idle state (IDLE) or a radio resource control inactive state (INACTIVE), or a currently resident cell provides an MBS service, or a currently resident cell provides an MBS service that the terminal is interested in.

FIG. 5 is a schematic flowchart of another paging method provided by embodiments of the present disclosure. The method is performed by a network device. As shown in FIG. 5, the method may include, but is not limited to, the following steps:

S10, responding to sending multicast broadcast service (MBS) paging message configuration information.

In embodiments of the present disclosure, the multicast broadcast service (MBS) paging message configuration information includes a resource configuration of an MBS paging message. The resource configuration of the MBS paging message is a specific configuration for transmitting the MBS paging message. It can be understood that information such as a position where the MBS paging message is carried may be determined according to the resource configuration of the MBS paging message.

In some embodiments, the MBS paging message configuration information includes one or more sets of resource configurations of the MBS paging message. The one or more sets of resource configurations of the MBS paging message may correspond to one or more MBS services.

In S20, the MBS paging message is sent based on the MBS paging message configuration information. The MBS paging message carries MBS service information.

It can be understood that during a paging process, the terminal determines whether there exists an MBS service of interest according to the resource configuration of the MBS paging message in the MBS paging message configuration information. When there exists an MBS service that the terminal is interested in, the terminal receives the MBS paging message.

In embodiments of the present disclosure, in response to the network device sending the multicast broadcast service (MBS) paging message configuration information, the MBS paging message is sent based on the MBS paging message configuration information. The MBS paging message carries the MBS service information. In embodiments of the present disclosure, in response to the network device sending the multicast broadcast service (MBS) paging message configuration information, the multicast broadcast service (MBS) paging message configuration information is provided for the terminal, the terminal may determine whether to receive the MBS paging message based on the MBS paging message configuration information, and the terminal receives the MBS paging message when the terminal is interested in the MBS service. This enables a rapid activation of the MBS service and a better power saving of the terminal.

In some embodiments, responding to sending the MBS paging message configuration information includes: responding to sending the MBS paging message configuration information specified in a protocol, or responding to sending the MBS paging message configuration information configured.

In embodiments of the present disclosure, the MBS paging message configuration information may be specified by the protocol, may be provided by the network device, or may be implemented in other ways, which will not be specifically limited by the present disclosure.

In some embodiments, responding to sending the MBS paging message configuration information configured includes: responding to sending the MBS paging message configuration information configured via system information or MBS control channel information or an RRC connection release message.

In embodiments of the present disclosure, when the MBS paging message configuration information is provided by the network device, it may be provided via the system information, such as: a system information block (SIB); or provided via the MBS control channel information, such as: a multicast control channel (MCCH); or provided via the RRC connection release message, or in any other ways that may be used to provide the MBS paging message configuration information, which will not be specifically limited by embodiments of the present disclosure.

In some embodiments, the MBS paging message configuration information includes the resource configuration of the MBS paging message. The resource configuration of the MBS paging message includes at least one of: a control channel of the MBS paging message; a time domain configuration of a data channel; a frequency domain configuration of the data channel; an identity of the MBS paging message; a paging cycle of the MBS paging message; a starting offset of the MBS paging message; or an association between a downlink beam and a control channel resource of the MBS paging message or a data channel resource.

The control channel of the MBS paging message and the time domain configuration of the data channel include for example: a paging search space of a physical downlink control channel (PDCCH) for scheduling an MBS service paging message. If no paging search space of the PDCCH for scheduling the MBS service paging message is additionally configured, a paging search space of a P-RNTI PDCCH may be used by default.

The control channel of the MBS paging message and the frequency domain configuration of the data channel include for example: a control resource set (CORESET) of the PDCCH for scheduling the MBS service paging message. If no CORESET of the PDCCH for scheduling the MBS service paging message is additionally configured, a CORESET of the P-RNTI PDCCH may be used by default.

The identity of the MBS paging message includes for example: an identity of the PDCCH for scheduling the MBS paging message, such as: an MBS identity identified by a P-RNTI. If no identity of the PDCCH for scheduling the MBS service paging message is additionally configured, an identity of the PDCCH identified by the P-RNTI may be used by default.

The paging cycle of the MBS paging message for example is a paging cycle of for example 50 ms, 100 ms, 200 ms, etc.

The starting offset of the MBS paging message. For example, a starting monitoring position of each cycle of the MBS paging message may be calculated by a following formula:

$$\text{mbs-StartOffset} = [(\text{SFN} \times 10) + \text{subframe\_number}] \text{ modulo (mbs-PagingCycle)},$$

where the SFN is a system frame number, the subframe_number is a subframe number and/or a time slot number and/or an orthogonal frequency division multiplexing (OFDM) symbol number, the mbs-PagingCycle is the paging cycle of the MBS paging message, and the mbs-StartOffset is a starting position offset of the MBS paging message.

For the association between the downlink beam and the control channel resource of the MBS paging message or the data channel resource, the data channel resource includes for example a physical downlink shared channel (PDSCH) resource.

In some embodiments, the MBS paging message configuration information further includes an MBS service identity corresponding to the resource configuration of the MBS paging message. The MBS service identity includes: a temporary mobile group identity (TMGI) or an MBS session identity or an MBS service flow identity.

In some embodiments, the downlink beam is marked by a synchronous signal block identity or a channel state information reference signal identity.

In some embodiments, the association between the downlink beam and the control channel resource of the MBS paging message or the data channel resource includes: in each paging cycle of the MBS paging message, an association between the downlink beam and one or more control channel resources of the MBS paging message or one or more data channel resources.

In embodiments of the present disclosure, in one paging cycle of the MBS paging message, N control channel resources of the MBS paging message are numbered according to time-frequency positions, and M downlink beams are numbered. The N control channel resources of the MBS paging message may be alternatively allocated to the M downlink beams in numbered order, or the N control channel resources of the MBS paging message may be continuously allocated to the M downlink beams in numbered order. Numbering is performed according to the time-frequency positions, including: numbering according to time domain positions or numbering according to frequency domain positions.

In an illustrative embodiment, if the N is 8, and the M is 4, that is, in one paging cycle of the MBS paging message, 8 control channel resources of the MBS paging message are numbered according to the time-frequency positions, and 4 downlink beams are numbered. The 8 control channel resources of the MBS paging message are alternatively allocated to the 4 downlink beams in numbered order, or the 8 control channel resources of the MBS paging message may be continuously allocated to the 8 downlink beams in numbered order.

The 8 control channel resources of the MBS paging message are alternatively allocated to the 4 downlink beams in numbered order. For example: control channel resources numbered 1 and 5 of the MBS paging message correspond to a downlink beam 1, control channel resources numbered 2 and 6 of the MBS paging message correspond to a downlink beam 2, control channel resources numbered 3 and 7 of the MBS paging message correspond to a downlink beam 3, and control channel resources numbered 4 and 8 of the MBS paging message correspond to a downlink beam 4.

The 8 control channel resources of the MBS paging message are continuously allocated to the 4 downlink beams in numbered order. For example: control channel resources numbered 1 and 2 of the MBS paging message correspond to the downlink beam 1, control channel resources numbered 3 and 4 of the MBS paging message correspond to the downlink beam 2, control channel resources numbered 5 and 6 of MBS paging message correspond to the downlink beam 3, and control channel resources numbered 7 and 8 of the MBS paging message correspond to 4.

In embodiments of the present disclosure, in one paging cycle of the MBS paging message, N data channel resources are numbered according to time-frequency positions, and M downlink beams are numbered. The N data channel resources may be alternatively allocated to the M downlink beams in numbered order, or the N data channel resources may be continuously allocated to the M downlink beams in numbered order. Numbering is performed according to the time-frequency positions, including numbering according to time domain positions or numbering according to frequency domain positions.

In an illustrative embodiment, if the N is 8, and the M is 4, that is, in one paging cycle of the MBS paging message, 8 data channel resources are numbered according to the time-frequency positions, and 4 downlink beams are numbered. The 8 data channel resources are alternatively allocated to the 4 downlink beams in numbered order, or the 8 data channel resources may be continuously allocated to the 4 downlink beams in numbered order.

The 8 data channel resources are alternatively allocated to the 4 downlink beams in numbered order. For example: data channel resources numbered 1 and 5 correspond to a downlink beam 1, data channel resources numbered 2 and 6 correspond to a downlink beam 2, data channel resources numbered 3 and 7 correspond to a downlink beam 3, and data channel resources numbered 4 and 8 correspond to a downlink beam 4.

The 8 data channel resources are continuously allocated to the 4 downlink beams in numbered order. For example: data channel resources numbered 1 and 2 correspond to the downlink beam 1, data channel resources numbered 3 and 4 correspond to the downlink beam 2, data channel resources numbered 5 and 6 correspond to the downlink beam 3, and data channel resources numbered 7 and 8 correspond to 4.

In some embodiments, if one set of resource configurations of the MBS paging message correspond to a plurality of MBS services, a plurality of resources of the MBS paging message in the set of resource configurations of the MBS paging message may be allocated to different MBS services respectively. For example, there are 2 PDCCH resources in one MBS paging cycle, PDCCH resource-1 is allocated to MBS service-1, and PDCCH resource-2 is allocated to MBS service-2.

In some embodiments, the MBS service information includes: an MBS service identity or an MBS service label.

The MBS service identity includes a temporary mobile group identity (TMGI) or an MBS session identity or an MBS service flow identity.

The MBS service label includes a system message, or an MBS service list provided in a user service description (USD) file. Each item in the MBS service list corresponds to an MBS service, and a label of an item in the MBS service list corresponds to an MBS service label. For example, there are 4 MBS services (MBS service-1, MBS service-2, MBS service-3, and MBS service-4) in the MBS service list, and items in the MBS service list are marked in order as item-1, item-2, item-3, and item-4, then labels of the item-1, the item-2, the item-3 and the item-4 correspond to the MBS service-1, the MBS service-2, the MBS service-3 and the MBS service-4, respectively.

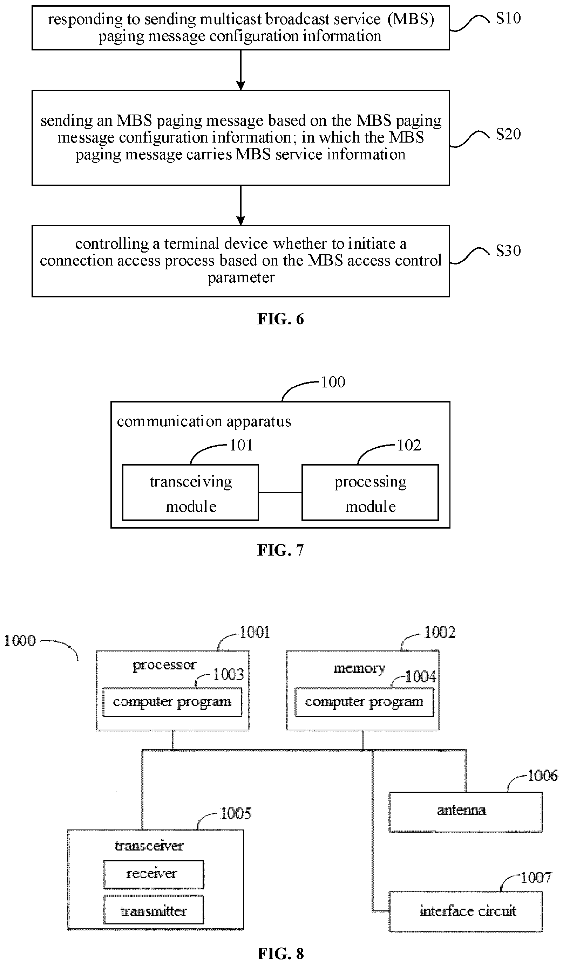

As shown in FIG. 6, in embodiments of the present disclosure, the MBS paging message configuration information includes: an MBS access control parameter. After S20: sending the MBS paging message based on the MBS paging message configuration information, S30 is performed: controlling a terminal whether to initiate a connection access process according to the MBS access control parameter.

In some embodiments, controlling the terminal to initiate the connection access process includes: controlling the terminal to provide indication information indicating that the MBS service needs to be received.

In embodiments of the present disclosure, the terminal is controlled to initiate the connection access process, and the terminal is controlled to provide the indication information to indicate that the MBS service needs to be received.

The indication information may include at least one of:

1) a reason for the connection access being a need of receiving the MBS service, for example: a value of cause indicated in an RRCSetuRequest or RRCResumeRequest message being mobile terminated-MBS (MT-MBS), that is, a connection establishment process initiated due to reception of an MBS paging.

2) the MBS service information, for example, the MBS service information including: an MBS service identity or an MBS service label.

The MBS service identity includes a temporary mobile group identity (TMGI) or an MBS session identity or an MBS service flow identity.

The MBS service label includes a system message, or an MBS service list provided in a user service description (USD) file. Each item in the MBS service list corresponds to an MBS service, and a label of an item in the MBS service list corresponds to an MBS service label. For example, there are 4 MBS services (MBS service-1, MBS service-2, MBS service-3, and MBS service-4) in the MBS service list, and items in the MBS service list are marked in order as item-1, item-2, item-3, and item-4, then labels of the item-1, the item-2, the item-3 and the item-4 correspond to the MBS service-1, the MBS service-2, the MBS service-3 and the MBS service-4, respectively.

In some embodiments, the MBS access control parameter includes at least one of: a specific access identity or access type corresponding to an MBS service; an access randomization parameter of the MBS service; or a duration configuration of an access prohibition, after determining that an access attempt is prohibited.

The specific access identity or access type corresponding to the MBS service includes: an access identity ID, such as access identity-1, or an access type, such as access category-1. When the specific access identity or access type indicates an access prohibition (for example: barred) in a currently resident cell, the terminal will not initiate an access request.

In some embodiments, the access randomization parameter of the MBS service includes: a random number interval for allowing access.

For the random number interval for allowing access, for example, a random parameter range is [0, 1], and a random parameter range for allowing access is [0, 0.5]. The terminal selects a random parameter from [0, 1] using a uniform distribution method, if the random parameter belongs to [0, 0.5], the terminal may initiate the access attempt.

In some embodiments, the duration configuration of the access prohibition includes: a duration of an access prohibition timer or a randomization value scaling parameter of an access prohibition timer.

In embodiments of the present disclosure, for the duration of the access prohibition timer, it can be understood that a corresponding duration is set through the access prohibition timer, so that after it is determined that the access attempt is prohibited, another access within the corresponding duration is prohibited.

In embodiments of the present disclosure, for the randomization value scaling parameter of the access prohibition timer, for example, after the terminal determines that access to the MBS service is prohibited, it needs to start the access prohibition timer of the MBS service, and the terminal does not initiate the access request during a running of the timer. If the duration of the access prohibition timer configured by the network device is a, the terminal selects a random number X from [0, 1] using a uniform distribution method, and a scaling parameter of the random number X configured on a network side or specified in a protocol is b (where a value of the b may be "1", that is, no additional scaling is performed on the random number X), and then a final value of the random number is bX, and the terminal determines the duration configuration y of the access prohibition by calculating according to the a and the bX.

In some embodiments, in case that the terminal is controlled not to initiate the connection access process according to the MBS access control parameter, a radio resource control (RRC) message corresponding to an access request is not sent, or random access request information is not sent.

In not sending the radio resource control (RRC) message corresponding to the access request, the radio resource control (RRC) message includes: a connection establishment request message or a connection resume request message.

Not sending the random access request information for example includes: not sending first random access response information Msg1 of a 4-step random access process, or not sending second random access response information MsgB of a 2-step random access process.

The paging method provided in the above embodiments of the present disclosure, a specific process of a corresponding step is similar to the paging method provided in some of the above embodiments, and achieves the same beneficial effects, and thus will not be described again here.

In the above embodiments provided by the present disclosure, the methods provided in embodiments of the present disclosure are introduced from perspectives of the network device and the terminal respectively. In order to implement the various functions in the methods provided by the above embodiments of the present disclosure, the network device and the terminal each may include a hardware structure and a software module, and implement the above various functions in a form of the hardware structure, the software module, or the hardware structure plus the software module. A certain function among the above mentioned various functions may be implemented in the form of the hardware structure, the software module, or the hardware structure plus the software module.

Referring to FIG. 7, FIG. 7 is a schematic block diagram of a communication apparatus 100 provided by embodiments of the present disclosure. The communication apparatus 100 shown in FIG. 7 may include a transceiving module 101 and a processing module 102. The transceiving module 101 may include a sending module and/or a receiving module, the sending module is configured to implement a sending function, the receiving module is configured to implement a receiving function, and the transceiving module 101 may implement the sending function and/or the receiving function.

The communication apparatus 100 may be a terminal, may also be an apparatus in the terminal, or may also be an apparatus that can be matched with the terminal. Alternatively, the communication apparatus 100 may be a network device, may also be an apparatus in the network device, or may also be an apparatus that can be matched with the network device.

The communication apparatus 100 is the terminal: the transceiving module 101 is configured to respond to reception of multicast broadcast service (MBS) paging message configuration information; and the processing module 102 is configured to determine whether to receive an MBS paging message based on the MBS paging message configuration information. The MBS paging message carries MBS service information.

The communication apparatus 100 is the network device: the transceiving module 101 is configured to respond to sending multicast broadcast service (MBS) paging message configuration information; and the processing module 102 is configured to send an MBS paging message based on the MBS paging message configuration information. The MBS paging message carries MBS service information.

Referring to FIG. 8, FIG. 8 is a schematic block diagram of another communication device 1000 provided by embodiments of the present disclosure. The communication device 1000 may be a network device, may also be a terminal, may also be a chip, a chip system, or a processor that supports the network device to implement the above method, or may also be a chip, a chip system, or a processor that supports the terminal to implement the above method. The device may be used to implement the methods as described in the above method embodiments, and for details, reference may be made to the descriptions on the above method embodiments.

The communication device 1000 may include one or more processors 1001. The processor 1001 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a DU or a CU, etc.), execute computer programs, and process data of computer programs.

Optionally, the communication device 1000 may further include one or more memories 1002 that may have stored therein a computer program 1004. The processor 1001 executes the computer program 1004 to cause the communication device 1000 to implement the methods as described in the above method embodiments. Optionally, the memory 1002 may have stored therein data. The communication device 1000 and the memory 1002 may be set separately or integrated together.

Optionally, the communication device 1000 may further include a transceiver 1005 and an antenna 1006. The transceiver 1005 may be called a transceiving element, a transceiving machine, a transceiving circuit or the like, for implementing a transceiving function. The transceiver 1005 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 1000 may further include one or more interface circuits 1007. The interface circuit 1007 is configured to receive a code instruction and transmit the code instruction to the processor 1001. The processor 1001 runs the code instruction to enable the communication device 1000 to execute the methods as described in the foregoing method embodiments.

The communication device 1000 is the terminal: the transceiver 1005 is configured to execute the S 1 in FIG. 2. The processor 1001 is configured to execute the S2 in FIG. 2.

The communication device 1000 is the network device: the transceiver 1005 is configured to execute the S 10 in FIG. 5. The processor 1001 is configured to execute the S20 in FIG. 5.

In an implementation manner, the processor 1001 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 1001 may have stored therein a computer program 1003 that, when run on the processor 1001, causes the communication device 1000 to implement the method as described in the foregoing method embodiments. The computer program 1003 may be solidified in the processor 1001, and in this case, the processor 1001 may be implemented by a hardware.

In an implementation manner, the communication device 1000 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal (such as the first terminal in the foregoing method embodiments), but the scope of the communication device described in the present disclosure is not limited thereto, and a structure of the communication device is not limited by FIG. 8. The communication device may be a stand-alone device or may be a part of a larger device. For example, the communication device may be:

(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

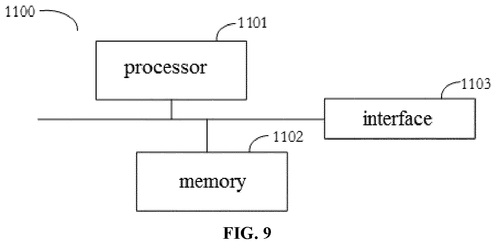

For the case where the communication device may be a chip or a chip system, reference may be made to a schematic structural diagram of the chip 1100 shown in FIG. 9. The chip 1100 shown in FIG. 9 includes a processor 1101 and an interface 1102. In the chip, one or more processors 1101 may be provided, and more than one interface 1102 may be provided.

For the case where the chip is used to implement functions of the terminal in embodiments of the present disclosure:
the interface 1102 is configured to execute the S 1 in FIG. 2; and the processor 1101 is configured to execute the S2 in FIG. 2.

For the case where the chip is used to implement functions of the network device in embodiments of the present disclosure:
the interface 1102 is configured to execute the S10 in FIG. 5; and the processor 1101 is configured to execute the S20 in FIG. 5.

Optionally, the chip further includes a memory 1103 for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such implementation should not be understood as beyond the protection scope of embodiments of the present disclosure.

Embodiments of the present disclosure also provide a communication system. The system includes the communication apparatus as the terminal (such as the terminal in the foregoing method embodiments) and the communication apparatus as the network device as described in the aforementioned embodiments in FIG. 7, or the system includes the communication device as the terminal (such as the terminal in the foregoing method embodiments) and the communication device as the network device as described in the aforementioned embodiments in FIG. 8.

The present disclosure also provides a computer-readable storage medium having stored therein instructions that, when executed, cause functions of any of the above method embodiments to be implemented.

The present disclosure also provides a computer program product that, when executed by a computer, causes functions of any of the above method embodiments to be implemented.

The beneficial effects of the above computer-readable storage medium, computer program product, and computer programs are the same as the beneficial effects of the paging methods described in some of the above embodiments, and thus will not be described again here.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Unless the context otherwise requires, throughout the specification and the claims, terms "comprise" and its other forms such as a third person singular form "comprises" and a present participle form "comprising" are interpreted as open and inclusive, it means "including, but not limited to". In the descriptions of the specification, the terms "one embodiment", "some embodiments", "exemplary embodiments", "example", "specific example", "some examples" or the like are intended to indicate that a particular feature, structure, material or characteristic associated with the embodiment or example is included in at least one embodiment or example of the present disclosure. The example representations of the above terms do not necessarily refer to a same embodiment or example. In addition, the particular feature, structure, material or characteristic may be included in any one or more embodiments or examples in any suitable manner.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of' may cover two, three, four or more, which are not limited in the present disclosure. The expression "A and/or B" includes following three cases: A only, B only, and a combination of A and B. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

**Claims**

1. A paging method, performed by a terminal and comprising:

   responding to reception of multicast broadcast service (MBS) paging message configuration information; and determining whether to receive an MBS paging message based on the MBS paging message configuration information; wherein the MBS paging message carries MBS service information.

2. The method according to claim 1, wherein responding to reception of the multicast broadcast service (MBS) paging message configuration information comprises:

   responding to reception of the MBS paging message configuration information specified in a protocol, or responding to reception of the MBS paging message configuration information provided by a network device.

3. The method according to claim 2, wherein responding to the MBS paging message configuration information provided by the network device comprises:
responding to the MBS paging message configuration information provided by the network device via system information or MBS control channel information or a radio resource control (RRC) connection release message.

4. The method according to any one of claims 1 to 3, wherein the MBS paging message configuration information comprises: a resource configuration of the MBS paging message; wherein the resource configuration of the MBS paging message comprises at least one of:

   a control channel of the MBS paging message;
   a time domain configuration of a data channel;
   a frequency domain configuration of the data channel;
   an identity of the MBS paging message;
   a paging cycle of the MBS paging message;
   a starting offset of the MBS paging message; or
   an association between a downlink beam and a control channel resource of the MBS paging message or a data channel resource.

5. The method according to claim 4, wherein the downlink beam is marked by a synchronous signal block identity or a channel state information reference signal identity.

6. The method according to claim 4 or 5, wherein the association between the downlink beam and the control channel resource of the MBS paging message or the data channel resource comprises:
in each paging cycle of the MBS paging message, an association between the downlink beam and one or more control channel resources of the MBS paging message or one or more data channel resources.

7. The method according to any one of claims 1 to 6, wherein the MBS paging message configuration information further comprises: an MBS service identity corresponding to the resource configuration of the MBS paging message, wherein the MBS service identity comprises: a temporary mobile group identity (TMGI) or an MBS session identity or an MBS service flow identity.

8. The method according to any one of claims 1 to 7, wherein the MBS service information comprises: an MBS service identity or an MBS service label.

9. The method according to any one of claims 1 to 8, further comprising: after responding to reception of the multicast broadcast service (MBS) paging message configuration information, determining whether to monitor a sending of the MBS paging message based on the MBS paging message configuration information.

10. The method according to claim 9, wherein determining whether to monitor the sending of the MBS paging message based on the MBS paging message configuration information comprises:

    not monitoring or stopping monitoring the sending of the MBS paging message, in case that an RRC connection state is a radio resource control connected state (CONNECTED), or a currently resident cell does not provide an MBS service, or a currently resident cell does not provide an MBS service that the terminal is interested in; or
    monitoring or starting monitoring the sending of the MBS paging message, in case that an RRC connection state is a radio resource control idle state (IDLE) or a radio resource control inactive state (INACTIVE), or a currently resident cell provides an MBS service, or a currently resident cell provides an MBS service that the terminal is interested in.

11. The method according to claim 10, wherein the MBS service that the terminal is interested in comprises:

    an MBS service marked by an MBS service identity that the terminal is interested in and provided in a user service description (USD) file; or
    an MBS service with an established MBS session; or
    an MBS service of which the terminal has joined a data transmission group.

12. The method according to any one of claims 9 to 11, wherein determining whether to monitor the sending of the MBS paging message based on the MBS paging message configuration information further comprises:

selecting a resource location in one paging cycle of the MBS paging message to monitor the sending of the MBS paging message, in case that the resource configuration of the MBS paging message comprises the association between the downlink beam and the control channel resource of the MBS paging message or the data channel resource.

13. The method according to claim 12, wherein selecting the resource location in one paging cycle of the MBS paging message to monitor the sending of the MBS paging message comprises:
in one paging cycle of the MBS paging message, selecting to monitor the sending of the MBS paging message in case that a measurement result of a beam is higher than a threshold value or a beam is a specified beam for receiving a paging message.

14. The method according to any one of claims 1 to 13, further comprising: starting an MBS service reception, in case that it is determined to receive the MBS paging message based on the MBS paging message configuration information.

15. The method according to claim 14, wherein starting the MBS service reception comprises initiating a connection access process, or receiving a corresponding MBS service based on the resource configuration of the MBS paging message.

16. The method according to claim 15, wherein initiating the connection access process comprises: the terminal providing indication information to indicate that the MBS service needs to be received.

17. The method according to claim 15 or 16, wherein initiating the connection access process comprises: initiating a connection establishment process or a connection resume process.

18. The method according to any one of claims 14 to 17, wherein the MBS paging message configuration information comprises: an MBS access control parameter; wherein starting the MBS service reception comprises: responding to reception of the MBS access control parameter, and determining whether to initiate the connection access process.

19. The method according to claim 18, wherein the MBS access control parameter comprises at least one of:

   a specific access identity or access type corresponding to an MBS service;
   an access randomization parameter of the MBS service; or
   a duration configuration of an access prohibition, after determining that an access attempt is prohibited.

20. The method according to claim 19, wherein the access randomization parameter of the MBS service comprises: a random number interval for allowing access.

21. The method according to claim 19 or 20, wherein the duration configuration of the access prohibition comprises: a duration of an access prohibition timer or a randomization value scaling parameter of an access prohibition timer.

22. The method according to any one of claims 1 to 13, further comprising: not starting an MBS service reception, in case that it is determined not to receive the MBS paging message based on the MBS paging message configuration information;
wherein not starting the MBS service reception comprises not initiating a connection access process.

23. The method according to claim 22, wherein not initiating the connection access process comprises: not sending an RRC message corresponding to an access request or not sending random access request information.

24. The method according to any one of claims 1 to 23, wherein determining whether to receive the MBS paging message based on the MBS paging message configuration information comprises:

   not receiving the MBS paging message, in case that an RRC connection state is a radio resource control connected state (CONNECTED), or a currently resident cell does not provide an MBS service, or a currently resident cell does not provide an MBS service that the terminal is interested in; or
   receiving the MBS paging message, in case that an RRC connection state is a radio resource control idle state (IDLE) or a radio resource control inactive state (INACTIVE), or a currently resident cell provides an MBS service, or the currently resident cell provides an MBS service that the terminal is interested in.

25. A paging method, performed by a network device and comprising:

   responding to sending multicast broadcast service (MBS) paging message configuration information; and sending an MBS paging message based on the MBS paging message configuration information; wherein the MBS paging message carries MBS service information.

26. The method according to claim 25, wherein responding to sending the multicast broadcast service (MBS) paging message configuration information comprises:

   responding to sending the MBS paging message configuration information specified in a protocol, or responding to sending the MBS paging message configuration information configured.

27. The method according to claim 26, wherein responding to sending the MBS paging message configuration information configured comprises: responding to sending the MBS paging message configuration information configured via system information or MBS control channel information or a radio resource control (RRC) connection release message.

28. The method according to any one of claims 25 to 27, wherein the MBS paging message configuration information comprises: a resource configuration of the MBS paging message; wherein the resource configuration of the MBS paging message comprises at least one of:

   a control channel of the MBS paging message;
   a time domain configuration of a data channel;
   a frequency domain configuration of the data channel;
   an identity of the MBS paging message;
   a paging cycle of the MBS paging message;
   a starting offset of the MBS paging message; or
   an association between a downlink beam and a control channel resource of the MBS paging message or a data channel resource.

29. The method according to claim 28, wherein the downlink beam is marked by a synchronous signal block identity or a channel state information reference signal identity.

30. The method according to claim 28 or 29, wherein the association between the downlink beam and the control channel resource of the MBS paging message or the data channel resource comprises:
   in each paging cycle of the MBS paging message, an association between the downlink beam and one or more control channel resources of the MBS paging message or one or more data channel resources.

31. The method according to any one of claims 25 to 30, wherein the MBS paging message configuration information further comprises: an MBS service identity corresponding to the resource configuration of the MBS paging message, wherein the MBS service identity comprises:
   a temporary mobile group identity (TMGI) or an MBS session identity or an MBS service flow identity.

32. The method according to any one of claims 25 to 31, wherein the MBS service information comprises: an MBS service identity or an MBS service label.

33. The method according to any one of claims 25 to 32, wherein the MBS paging message configuration information comprises: an MBS access control parameter;
   wherein after sending the MBS paging message based on the MBS paging message configuration information, the method further comprises:
   controlling a terminal to initiate a connection access process based on the MBS access control parameter.

34. The method according to claim 33, wherein controlling the terminal to initiate the connection access process comprises: controlling the terminal to provide indication information indicating that the MBS service needs to be received.

35. The method according to claim 33 or 34, wherein the MBS access control parameter comprises at least one of:

   a specific access identity or access type corresponding to an MBS service;

an access randomization parameter of the MBS service; or
a duration configuration of an access prohibition, after determining that an access attempt is prohibited.

36. The method according to claim 35, wherein the access randomization parameter of the MBS service comprises: a random number interval for allowing access.

37. The method according to claim 35 or 36, wherein the duration configuration of the access prohibition comprises: a duration of an access prohibition timer or a randomization value scaling parameter of an access prohibition timer.

38. The method according to any one of claims 33 to 37, further comprising: controlling the terminal not to initiate the connection access process based on the MBS access control parameter;
wherein not initiating the connection access process comprises: not sending an RRC message corresponding to an access request or not sending random access request information.

39. A communication apparatus, comprising:

a transceiving module configured to respond to reception of multicast broadcast service (MBS) paging message configuration information; and
a processing module configured to determine whether to receive an MBS paging message based on the MBS paging message configuration information; wherein the MBS paging message carries MBS service information.

40. A communication apparatus, comprising:

a transceiving module configured to respond to sending multicast broadcast service (MBS) paging message configuration information; and
a processing module configured to send an MBS paging message based on the MBS paging message configuration information; wherein the MBS paging message carries MBS service information.

41. A communication device, comprising:

a processor; and
a memory having stored therein a computer program,
wherein the processor executes the computer program stored in the memory, to cause the device to implement the method according to any one of claims 1 to 24.

42. A communication device, comprising:

a processor; and
a memory having stored therein a computer program,
wherein the processor executes the computer program stored in the memory, to cause the device to implement the method according to any one of claims 25 to 38.

43. A communication device, comprising a processor and an interface circuit;

wherein the interface circuit is configured to receive code instructions and transmit the code instructions to the processor; and
the processor is configured to run the code instructions to implement the method according to any one of claims 1 to 24.

44. A communication device, comprising a processor and an interface circuit;

wherein the interface circuit is configured to receive code instructions and transmit the code instructions to the processor; and
the processor is configured to run the code instructions to implement the method according to any one of claims 25 to 38.

45. A computer-readable storage medium having stored therein instructions that, when executed, cause the method according to any one of claims 1 to 24 to be implemented.

46. A computer-readable storage medium having stored therein instructions that, when executed, cause the method according to any one of claims 25 to 38 to be implemented.

10

communication system

11

network device

12

terminal device

**FIG. 1**

responding to reception of multicast broadcast service (MBS) paging message configuration information — S1

determining whether to receive an MBS paging message based on the MBS paging message configuration information; in which the MBS paging message carries MBS service information — S2

**FIG. 2**

responding to reception of multicast broadcast service (MBS) paging message configuration information — S1

determining whether to monitor a sending of the MBS paging message based on the MBS paging message configuration information — S3

determining whether to receive an MBS paging message based on the MBS paging message configuration information; in which the MBS paging message carries MBS service information — S2

**FIG. 3**

responding to reception of multicast broadcast service (MBS) paging message configuration information — S1

determining whether to monitor a sending of the MBS paging message based on the MBS paging message configuration information — S3

S2

whether to receive an MBS paging message — NO → not starting the MBS service reception — S42

YES

starting an MBS service reception — S41

**FIG. 4**

responding to sending multicast broadcast service (MBS) paging message configuration information — S10

sending an MBS paging message based on the MBS paging message configuration information; in which the MBS paging message carries MBS service information — S20

**FIG. 5**

responding to sending multicast broadcast service (MBS) paging message configuration information — S10

sending an MBS paging message based on the MBS paging message configuration information; in which the MBS paging message carries MBS service information — S20

controlling a terminal device whether to initiate a connection access process based on the MBS access control parameter — S30

**FIG. 6**

— 100

communication apparatus

— 101

transceiving module

— 102

processing module

**FIG. 7**

1000 —

— 1001

processor

— 1003

computer program

— 1002

memory

— 1004

computer program

— 1006

antenna

— 1005

transceiver

receiver

transmitter

— 1007

interface circuit

**FIG. 8**

**FIG. 9**

## INTERNATIONAL SEARCH REPORT

| International application No. |
|---|
| **PCT/CN2021/092894** |

### A. CLASSIFICATION OF SUBJECT MATTER

H04W 4/06(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 多播, 广播, 组播, 寻呼, 配置, 指示, 通知, 资源, 周期, 偏移, 时域, 频域, multicast, broadcast, groupcast, MBS, MBMS, pag+, configuration, indicat+, notif+, resource, offset, cycle, beam, group

### C. DOCUMENTS CONSIDERED TO BE RELEVANT

| Category* | Citation of document, with indication, where appropriate, of the relevant passages | Relevant to claim No. |
|---|---|---|
| X | QUALCOMM INCORPORATED. "NR Multicast group paging aspects" *3GPP TSG-RAN WG2 Meeting #113bis-e R2-2103179,* Vol. , No. , 19 April 2021 (2021-04-19), ISSN: , sections 1-2 | 1-46 |
| X | CN 101483811 A (DATANG MOBILE COMMUNICATIONS EQUIPMENT CO., LTD.) 15 July 2009 (2009-07-15) description, page 5, paragraph 8 to page 8, the second-to-last paragraph | 1-46 |
| A | CN 111935807 A (ZTE CORP.) 13 November 2020 (2020-11-13) entire document | 1-46 |
| A | HUAWEI et al. "IDLE/INACTIVE UE support for NR MBS" *3GPP TSG-RAN WG2 Meeting #111-e R2-2007029,* Vol. , No. , 28 August 2020 (2020-08-28), ISSN: , entire document | 1-46 |
| A | US 2013058280 A1 (LG ELECTRONICS INC.) 07 March 2013 (2013-03-07) entire document | 1-46 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2022** | **14 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 101483811 | A | 15 July 2009 | None | | | |
| CN | 111935807 | A | 13 November 2020 | None | | | |
| US | 2013058280 | A1 | 07 March 2013 | KR | 20110120835 | A | 04 November 2011 |
| | | | | WO | 2011136618 | A2 | 03 November 2011 |

Form PCT/ISA/210 (patent family annex) (January 2015)